# EUROPÄISCHE PATENTSCHRIFT

(11) **EP 2 107 649 B1**
(45) Veröffentlichungstag und Bekanntmachung des Hinweises auf die Patenterteilung: **24.08.2016**
(21) Anmeldenummer: 09004239.1
(22) Anmeldetag: 25.03.2009
(51) Int. Cl.: H01R 29/00, H02K 5/22, H02K 11/00, H01R 13/52, H01R 4/48, H01R 9/24, H01R 107/00

(54) **Codierbare Motoranschlusssteckkuplung**
Encodable motor connector
Connecteur configurable pour moteur électrique

(30) Priorität: 04.04.2008 DE 202008004766 U
(43) Veröffentlichungstag der Anmeldung: 07.10.2009
(73) Patentinhaber: PHOENIX CONTACT Connector Technology GmbH, 71083 Herrenberg (DE)
(72) Erfinder: Michel, Markus, 72202 Nagold (DE); Wehrle, Gerhard, 78166 Donaueschingen (DE)
(74) Vertreter: Klocke, Peter

(56) Entgegenhaltungen:
- EP-A- 0 633 626
- DE-A1- 3 435 289
- DE-A1- 3 934 981
- DE-B3- 10 360 547
- DE-U1- 8 906 106
- DE-U1- 20 221 194
- DE-U1- 20 301 077
- DE-U1- 29 915 512
- GB-A- 2 435 554
- US-A- 2 321 999
- US-A- 2 507 242
- US-A- 4 429 935
- US-A- 4 748 355
- US-A- 4 781 610
- US-A- 4 880 391
- US-B1- 6 746 279

## Beschreibung

Die Erfindung betrifft eine Anschlusssteckkupplung zur Spannungsversorgung eines Mehrphasenmotors, mit einem Steckkupplungsgehäuse, das eine der Anzahl der anzuschließenden elektrischen Anschlussleitungen entsprechende Anzahl von elektrisch leitfähigen Durchgangselementen aufweist, wobei mittels der Durchgangselemente eine elektrische Verbindung der Anschlussleitungen zu Steckkontakten eines außen an einem Motorgehäuse des Mehrphasenmotors angebrachten Anschlusssteckers herstellbar ist, die mit den Wicklungsleitern des Motors verbunden sind, wobei das Steckkupplungsgehäuse einen von einem Anschlussbereich getrennten Codierbereich aufweist, in dem die Betriebsart des Motors in Dreiecks- oder Sternschaltung durch interne als Steckverbindung ausgebildete Brückenkonfiguration der Durchgangselemente festlegbar ist, und wobei der Codierbereich als abgeschlossener Codierraum und der Anschlussbereich als ein von dem Codierraum abgetrennter Anschlussraum ausgebildet ist.

Bei vielen elektrischen Verbrauchern hängt die ordnungsgemäße Funktion und die elektrische Sicherheit vom richtigen Anschluss an die Stromversorgung ab. Dies gilt insbesondere bei Drehstromverbrauchern, beispielsweise bei Drehstrommotoren, bei der die Drehrichtung und die Leistung durch die Anschlussart bestimmt werden. Bekannte Anschlussarten für Mehrphasenmotoren sind die Dreiecks- und die Sternschaltung, bei der die drei Motorwicklungen entweder in Reihe oder an einem Ende zusammengeschaltet werden. Bei der Dreiecksschaltung wird ein Drei- und bei der Sternschaltung ein Vierleitersystem zur Zuleitung von elektrischer Energie zu dem Drehstrommotor verwendet, wobei die vorgesehenen Anschlussleitungen in einer bestimmten Reihenfolge mit den zuvor miteinander in der gewünschten Schaltungsart zusammengeschalteten Motorwicklungen zu verbinden sind. Dabei ist die Drehrichtung des Motors abhängig von der gewählten Reihenfolge der Anschlussleitungen und dessen Leistung von der gewählten Schaltungsart.

Mehrphasenmotoren sind für die verschiedenen Betriebsarten fest vorkonfiguriert, umkonfigurierbar sowie unkonfiguriert vom Hersteller oder vom Händler erhältlich. Nicht konfigurierte oder veränderbar vorkonfigurierte Motoren reduzieren die Typenvielfalt bei der Herstellung und der Bevorratung von Motoren und mindern die damit verbundenen Kosten.

Üblicherweise erfolgt die Festlegung der Betriebsart durch Brückenkonfiguration an einem Anschluss- und/oder Verbindungsklemmenblock des Mehrphasenmotors, der mit dessen Motorgehäuse mechanisch und mit den Motorwicklungen elektrisch leitend fest verbunden ist. In der Regel sind die Klemmenanschlussblöcke in einem Motoranschlusskasten untergebracht. Zur Vereinfachung der Brückenkonfiguration sind Brückungskämme oder Verbindungsschienen bekannt, die in den Verbindungsklemmenblock einsetzbar sind. Beispielhaft wird auf das Gebrauchsmuster DE 203 01 077 U1 und die Offenlegungsschrift DE 39 34 981 A1 verwiesen. Dabei werden naturgemäß für die Dreiecks- und die Sternschaltung unterschiedliche Brückungskämme bzw. Verbindungsschienen benötigt.

Zum Stand der Technik wird weiterhin auf die Druckschriften DE 34 35 289 A1 und DE 89 06 106 U1 verwiesen.

Die DE 34 35 289 A1 offenbart einen Anschlusskasten zum direkten Befestigen an der Außenseite eines Pumpenmotorgehäuses, mit einem vorstehenden, Kontakte aufweisenden Steckteil, das durch eine Öffnung des Motorgehäuses führbar ist, um Gegenkontakte des Motorstators zu erreichen. Eine Umschaltvorrichtung weist ein im Anschlusskastengehäuse befestigtes Buchsenteil auf, dessen Buchsen mit den Kontakten des Steckteils elektrisch verbunden sind. Auf das Buchsenteil ist ein Stecker steckbar, an dem auf zwei einander gegenüberliegenden Seiten Kontaktstifte vorgesehen sind. Die Stifte der ersten Seite sind mit denen der zweiten Seite elektrisch nicht verbunden und die Stifte der ersten Seite weisen untereinander andere Verbindungen auf als die der zweiten Seite. Der Anschlusskasten weist einen Anschlussbereich für den Netzanschluss auf, der von einer abnehmbaren Haube verschlossen und von einem Codierbereich getrennt ist, in dem ein Codierstecker in unterschiedlichen Stellungen eingesteckt werden kann.

Die DE 89 06 106 U1 lehrt einen Motoranschlussstecker mit einem spritzgegossenen Körper, wobei ein in dem Motor einzusteckender Abschnitt eine Anzahl von nebeneinander liegenden Kanälen aufweist. Die nach außen ragenden Teile der in den Kanälen eingesteckten Anschlussstifte sind um 90° gebogen und in nach außen offenen Hohlräumen des spritzgegossenen Körpers aufgenommen. Jeder zweite Anschlussstift ist in einem vorgeschobenen Hohlraum angeordnet, während die übrigen Anschlussstifte in zurückliegenden Hohlräumen derart aufgenommen sind, dass die Reihen von Anschlussstiften im Verhältnis zueinander verschoben liegen. Umschaltungen lassen sich leicht mittels vorgesehenen Brückungselementen durchführen. Unter den Hohlräumen sind Öffnungen für Muttern für Schrauben zum Festhalten sowohl des Anschlussstiftes als auch der Brückungselemente vorgesehen.

Die Verbindungsklemmenblöcke von Antriebsmotoren sind wegen beengter Platzverhältnisse häufig nach dem Anbau des Mehrphasenmotors an ein Maschinengestell nur noch schwer zugänglich. Dies erschwert die Brückenkonfiguration in unnötiger Weise, wenn der Motor anschließend an den Anbau elektrisch angeschlossen und die Betriebsart festgelegt werden muss. Dabei ist der Anschluss der elektrischen Anschlussleitungen an die Anschlussklemmen zeitaufwändig. Zur Vereinfachung ist es aus der Praxis bekannt, die Anschlussklemmenblöcke als Motoranschlussstecker mit einer Anzahl von Steckkontakten auszubilden, in die eine Anschlusskupplung mit Steckbuchsen einsteckbar ist. Der Anschlusssteckkupplung sind die elektrischen Netzanschlussleitungen zugeführt und in der benötigten Reihenfolge mit den Steckbuchsen verbunden. Dabei können bei Defekten im Bereich des Elektromotors oder bei Wartungsarbeiten, welche den Ausbau des Motors erfordern, die elektrischen Verbindungen zum Motor schnell und einfach getrennt bzw. wieder sicher hergestellt werden.

Der Erfindung liegt die Aufgabe zugrunde, eine andere Möglichkeit vorzuschlagen, die es erlaubt, die erforderlichen Schaltungsvarianten der Motorwicklungen auch beengten Platzverhältnissen nach dem Einbau eines Mehrphasenmotors schnell und sicher herzustellen. Diese Aufgabe wird erfindungsgemäß durch eine Anschlusssteckkupplung mit den Merkmalen des Anspruchs 1 gelöst. Weitere vorteilhafte Ausgestaltungen sind den Unteransprüchen zu entnehmen.

Das Steckkupplungsgehäuse der erfindungsgemäßen Anschlusssteckkupplung weist einen von einem Anschlussbereich abgetrennten Codierbereich auf, in dem die Betriebsart des Motors in Dreiecks- oder Sternschaltung durch interne Brückenkonfiguration von elektrisch leitfähigen Durchgangselementen festlegbar ist. Die Durchgangselemente sind in dem Steckkupplungsgehäuse in einer der Anzahl der anzuschließenden elektrischen Anschlussleitungen entsprechenden Anzahl vorgesehen, so dass mittels jedem der Durchgangselemente eine elektrische Verbindung der Anschlussleitungen zu einem zugeordneten Steckkontakt eines außen an einem Motorgehäuse des Mehrphasenmotors angebrachten Anschlusssteckers herstellbar ist. Die Steckkontakte des Anschlusssteckers sind mit den Wicklungsleitern des Motors verbunden. Erfindungsgemäß weisen die Durchgangselemente Kontaktbuchsen zum Eingriff der Steckkontakte des Anschlusssteckers sowie des internen Codiersteckers auf. Die Kontaktbuchsen für die Steckkontakte weisen in Einsteckrichtung der Anschlusssteckkupplung, d.h. in Richtung der Steckkontakte des Anschlusssteckers, während die Kontaktbuchsen für den Codierstecker, der zur Brückenkonfiguration vorgesehenen Brückungselemente aufweist, in Richtung des Codierraumes ausgerichtet sind. Dabei sind die Durchgangselemente in einem in das Steckkupplungsgehäuse eingesetzten Isolierkörper angeordnet. der in dem Steckkupplungsgehäusekörper lösbar fixiert ist. Das Steckkupplungsgehäuse ist aus einem vorderen und einem hinteren Steckkupplungsgehäuseteil zusammengesetzt ist, die mit einem quer zu der Steckrichtung der Anschlusssteckkupplung angeordneten Schwenkgelenk miteinander verbunden sind. Das hintere Steckkupplungsgehäuseteil bildet einen schwenkbeweglich angebrachten Steckkupplungsgehäusedeckel, der von dem vorderen Steckkupplungsgehäuseteil seitlich weg schwenkbar, so dass der Anschlussbereich bzw. der Anschlussraum sowie der Codierbereich bzw. der Codierraum, der in dem Isolierkörper angeordnet ist, zugänglich sind, wobei der schwenkbare Steckkupplungsgehäusedeckel den Anschlussraum des Steckkupplungsgehäuses verschließt.

Dies hat den Vorteil, dass an dem Motor selbst keinerlei Maßnahmen erforderlich sind, um die Betriebsart und die Drehrichtung des Mehrphasenmotors festzulegen. Alle dazu notwendigen Maßnahmen können allein an der Anschlusssteckkupplung im Anschluss- und/oder Codierraum durchgeführt werden. Prinzipiell können die Maßnahmen ausgeführt werden, wenn die Anschlusssteckkupplung mit dem Anschlussstecker des Motors verbunden oder von diesem gelöst ist. In jedem Fall ist eine netzseitige Freischaltung der Anschlussleitungen zuvor erforderlich. Die Brückenkonfiguration und der Anschluss der elektrischen Anschlussleitungen ist natürlich erleichtert, wenn die Anschlusssteckkupplung von dem Anschlussstecker getrennt ist.

Die Brückenkonfiguration ist als interne Steckverbindung ausgebildet, die in dem Codierraum hergestellt wird. Die Brückung von bestimmten Durchgangselementen erfolgt dabei vorzugsweise mittels Stanz- und/oder Drahtbiege- und/oder Stanzbiegeteile als Brückungselemente, die in einem entsprechenden Rastermaß vorgefertigt der Anschlusssteckkupplung beigefügt sind. Damit kann in einfacher Weise der elektrische Kontakt zwischen den miteinander zu verbindenden Durchgangselementen schnell und kontaktsicher hergestellt werden. Auch eine Änderung der Betriebsart ist damit schnell und problemlos möglich.

In einer Ausführungsform der Erfindung weist die interne Steckverbindung einen Codierstecker auf. In dem Codierstecker sind die Brückungselemente für jeweils eine Betriebsart zusammengefasst, was die Codierung als Dreiecks- bzw. Sternschaltung nochmals vereinfacht und beschleunigt. Die jeweiligen Brückungselemente sind dabei vorzugsweise in einen Kunststoffträger eingebettet, der auch eine falsche Polung bezüglich der Durchgangselemente verhindern kann.

Zweckmäßigerweise sind die Durchgangselemente, die die Kontaktbuchsen zum Eingriff der Steckkontakte des Anschlusssteckers sowie des internen Codiersteckers aufweisen, als Stanzbiegeteile hergestellt . Dabei sind die Durchgangselemente vorzugsweise aus einem flachen Bandmaterial hergestellt.

Bei einer Variante der erfindungsgemäßen Anschlusssteckkupplung weisen die Durchgangselemente jeweils eine Federschenkelklemme zum Befestigen der elektrischen Anschlussleitungen auf. Die Federschenkelklemmen werden dabei über Klemmenstößel betätigt, die in den Anschlussraum hineinragen, so dass die Anschlussleitungen besonders einfach mit den Durchgangselementen verbindbar bzw. von diesen lösbar sind.

Für die Festlegung der Drehrichtung des Drehstrommotors müssen die Anschlussleitungen in der richtigen Reihenfolge an bestimmte Durchgangselemente der Anschlusssteckkupplung angeschlossen werden. Für die Änderung der Drehrichtung sind lediglich zwei der Anschlussleitungen in dem Anschlussraum zu vertauschen, was durch die Federschenkelklemmen schnell und problemlos möglich ist.

In einer vorteilhaften Ausführungsform der Erfindung weist der Codierraum eine vorzugsweise abnehmbare Codierraumabdeckung auf, die die Kontaktbuchsen für die Codierstecker und/oder die Brückungselemente und/oder den Codierstecker abdeckt und damit vor Beschädigung schützt. Sie ist aus einem isolierenden Material ausgebildet und wirkt damit als Berührungsschutz von möglicherweise spannungsführenden Teilen bei Installations- und Wartungsarbeiten.

Besonders vorteilhaft ist es, wenn das Steckkupplungsgehäuse mit einem schwenkbeweglich angebrachten Steckkupplungsgehäusedeckel ausgebildet ist, der eine Sicherung aufweist, die ein unbeabsichtigtes Öffnen des geschlossenen Gehäusedeckels verhindert. Idealerweise ist der Steckkupplungsgehäusedeckel an der dem Motor abgewandten Seite des Steckkupplungsgehäuse angelenkt, so dass sich der Gehäusedeckel auch öffnen und schwenken lässt, wenn die Anschlusssteckkupplung und der Anschlussstecker des Motors miteinander verbunden sind. Das Schwenkgelenk ist zweckmäßigerweise an der dem Motor zugewandten Seite des Steckkupplungsgehäuses derart angeordnet, dass das hintere Kupplungsgehäuseteil in Richtung des Motors gegenüber dem vorderen Kupplungsgehäuseteil um bis zu 90 Grad oder mehr schwenkbar ist.

Die erfindungsgemäße Anschlusssteckkupplung erlaubt somit die vollständige Programmierung des Motors allein an bzw. in der Steckkupplung. Zum Einen ist die Betriebsart des Motors als Stern/Dreieck darin festlegbar und kann wahlweise zugänglich oder unzugänglich ausgebildet sein. Zum Anderen kann die Drehrichtung des Motors durch Vertauschen zweier Phasen mittels der Federschenkelklemmen leicht erfolgen. Sämtliche Änderungen können durch die gute Zugänglichkeit auf Grund des schwenkgelagerten Steckkupplungsgehäusedeckels auch unter schwierigen Einbaubedingungen in den Fertigungsstätten leicht vorgenommen werden.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich oder mehreren bei unterschiedlichen Ausführungsformen der Erfindung verwirklicht sein. Es zeigen:
- Figur 1: einen Drehstrommotor mit Anschlussstecker und mit einer mit dem Anschlussstecker verbundenen erfindungsgemäßen Anschlusssteckkupplung in perspektivischer Ansicht;
- Figur 2: die Anschlusssteckkupplung aus Figur 1 mit Blick auf die Einsteckseite;
- Figur 3: die Anschlusskupplung aus Figur 2 mit aufgeschwenktem Steckkupplungsgehäusedeckel mit Blick auf den Anschlussraum;
- Figur 4: den Isolierkörper der erfindungsgemäßen Anschlusssteckkupplung mit darin aufgenommenen Durchgangselementen mit Blick auf die Anschlussseite;
- Figur 5: den Isolierkörper aus Figur 5 mit geöffnetem Codierraum;
- Figur 6: den Isolierkörper aus Figur 6 mit abgenommenem Oberteil;
- Figur 7: erste Brückungselemente für eine Dreiecksschaltung sowie zweite Brückungselemente für eine Sternschaltung zur Brückenkonfiguration der Durchgangselemente der erfindungsgemäßen Steckkupplung; und
- Figur 8: einen ersten Codierstecker für eine Dreiecksschaltung und einen zweiten Codierstecker für eine Sternschaltung mit den Brückungselementen aus Figur 7.

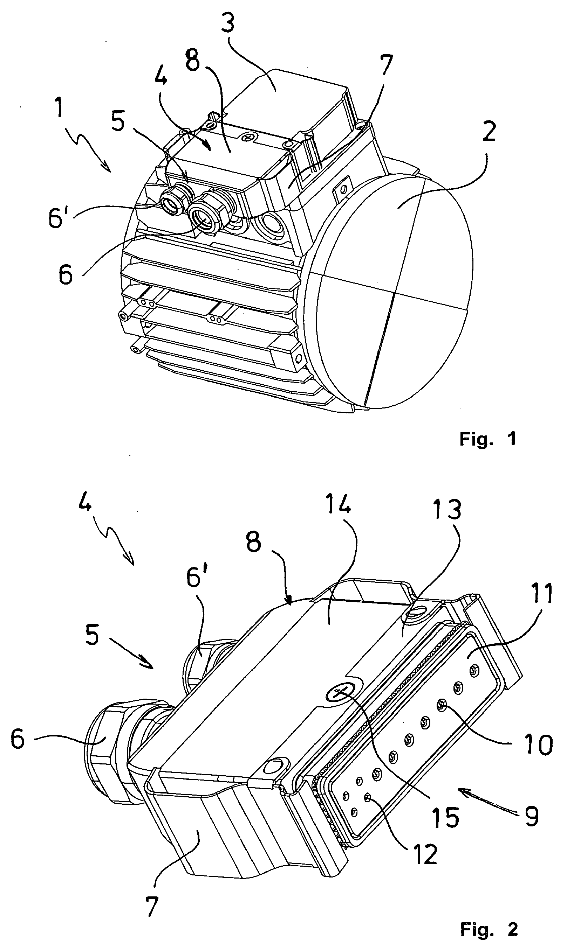

Figur 1 zeigt einen Mehrphasenmotor 1 mit einem Motorgehäuse 2, an dem außen ein Anschlussstecker 3 angebracht ist. In der Figur 1 nicht sichtbare Steckkontakte des Anschlusssteckers 3 sind mit den Wicklungsleitern des Motors 1 elektrisch leitend verbunden. Die Spannungsversorgung des Mehrphasenmotors 1 erfolgt über eine erfindungsgemäße Anschlusssteckkupplung 4, die mit dem Anschlussstecker 3 zusammengesteckt ist. Die Anschlusssteckkupplung 4 ist mit in der Zeichnung nicht dargestellten elektrischen Anschlussleitungen mit dem Stromnetz verbindbar. Zum Einführen der Anschlussleitungen weist die Steckkupplung 4 an einem hinteren Ende 5 zwei Kabeldurchführungen 6, 6' auf, wobei die Kabeldurchführung 6 für das Netzkabel und die Kabeldurchführung 6' für ein Steuerkabel vorgesehen sind. Die Anschlusssteckkupplung 4 ist mit zwei Sicherungsklammern 7, die seitlich an einem Steckkupplungsgehäuse 8 der Anschlusssteckkupplung 4 angeordnet sind, mit dem Anschlussstecker 3 verriegelt.

Die Klammern 7 sind federnd ausgebildet und schwenkbar an dem Steckkupplungsgehäuse 8 befestigt. Sie greifen in Nuten im Anschlussstecker 3 und in der Anschlusssteckkupplung 4 ein.

Figur 2 zeigt die erfindungsgemäße Anschlusssteckkupplung 4 ohne den in der Figur 1 dargestellten Motor 1, mit Blick auf das vordere Ende 9, das dem Anschlussstecker 3 zugeordnet ist. Das vordere Ende 9 ist dabei komplementär zu der Einsteckseite des Anschlusssteckers 3 ausgebildet und weist in einem Isolierkörper 11 sieben Durchgangselemente 10 auf. Über die Durchgangselemente 10 sind die elektrischen Anschlussleitungen nach dem Einstecken der Anschlusssteckkupplung 4 in den Anschlussstecker 3 direkt mit den Wicklungsleitern des Motors 1 verbunden. Außer den sieben Durchgangselementen 10, die in einer Reihe angeordnet sind und der Spannungsversorgung des Motors 1 dienen, sind noch weitere Durchgangselemente 12 außerhalb der Reihe in dem Isolierkörper 11 vorgesehen, die beispielsweise für einen Drehzahlsensor oder andere Steuer-, Regel, oder Messeinrichtungen verwendbar sind. Das Steckkupplungsgehäuse 8 ist aus Metall hergestellt und kann daher als Durchgangselement für den Erdleiter dienen.

Das Kupplungsgehäuse 8 ist zweiteilig ausgebildet. Es besteht aus einem ersten vorderen Gehäuseteil 13 und einem daran anschließenden zweiten hinteren Gehäuseteil 14, die schwenkbeweglich miteinander verbunden sind. Das vordere Gehäuseteil 13 wird in der weiteren Figurenbeschreibung als Steckkupplungsgehäusekörper 13 und das hintere Gehäuseteil 14 als Steckkupplungsgehäusedeckel 14 bezeichnet. Bei geschlossenem Steckkupplungsgehäusedeckel 14 verhindert eine Sicherungsschraube 15 das Wegschwenken des Gehäusedeckels 14 von dem Steckkupplungsgehäusekörper 13.

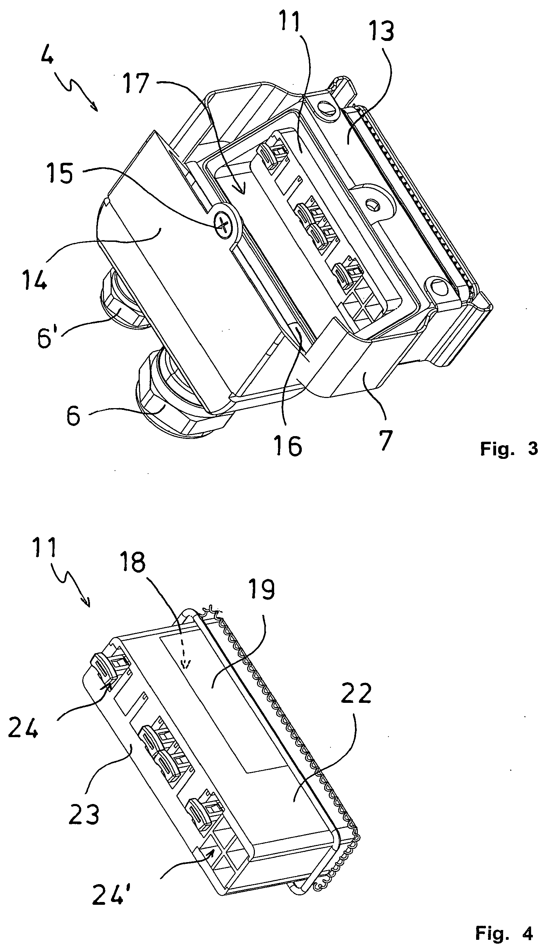

Figur 3 zeigt die Steckanschlusskupplung 4 mit geöffneten Steckkupplungsgehäusedeckel 14. Der Steckkupplungsgehäusedeckel 14, der über ein Schwenkgelenk 16 mit dem Steckkupplungsgehäusekörper 13 verbunden ist, ist um circa 90 Grad gegenüber dem Steckkupplungsgehäusekörper 13 geschwenkt, so dass ein Anschlussraum 17 der Steckanschlusskupplung 4 frei zugänglich ist.

Die in der Figur 3 nicht enthaltenen elektrischen Anschlussleitungen erreichen den Anschlussraum 17 über die Kabeldurchführungen 6, 6', die an dem hinteren Ende 5 des Kupplungsgehäusedeckels 14 angeordnet sind. Beim Durchtritt durch die Kabeldurchführungen 6, 6' kann die Schirmung des die Anschlussleitungen enthaltenen Anschlusskabels in bekannter Weise mittels einer Iris-Kontaktierung elektrisch leitend mit dem Steckkupplungsgehäuse 8 verbunden werden. In der um 90 Grad abgewinkelten Stellung des geschwenkten Steckkupplungsgehäusedeckel 14 kann die Kontaktierung der Schirmung durch die Iris überprüft und sicher festgestellt werden.

In den Anschlussraum 17 des Steckkupplungsgehäuses 8 ragt der Isolierkörper 11 mit den Durchgangselementen 10, 12 mit der Anschlussseite hinein. Der Anschluss der nicht dargestellten Anschlussleitungen zu den Durchgangselementen 10, 12 erfolgt über eine Steck- und/oder Klemmverbindung. Der Isolierkörper 11 ist lösbar in dem Steckkupplungsgehäuse 8 fixiert. Er ist vorzugsweise nach vorne aus dem Steckkupplungsgehäusekörper 13 entfernbar, um die Betriebsart des Motors 1 in Dreiecks- oder Sternschaltung durch interne Brückenkonfiguration festlegen zu können. Nach der erfolgten Konfiguration ist er in umgekehrter Richtung wieder einfach in den Steckkupplungsgehäusekörper 13 des Steckkupplungsgehäuses 8 einführbar. Hierzu kann eine nur mit einem Entriegelungswerkzeug zu öffnende Verriegelung vorgesehen sein, um die Änderung der Codierung nur durch einen Befugten zu erlauben.

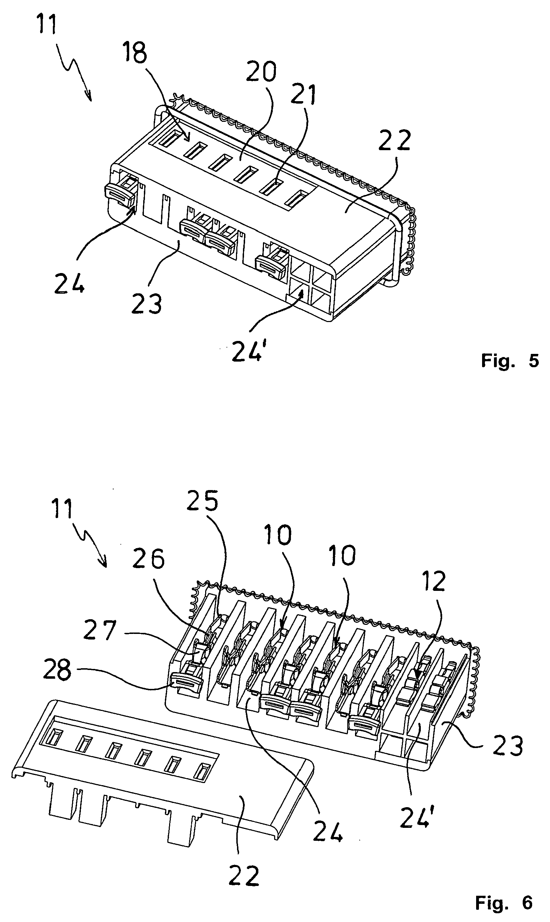

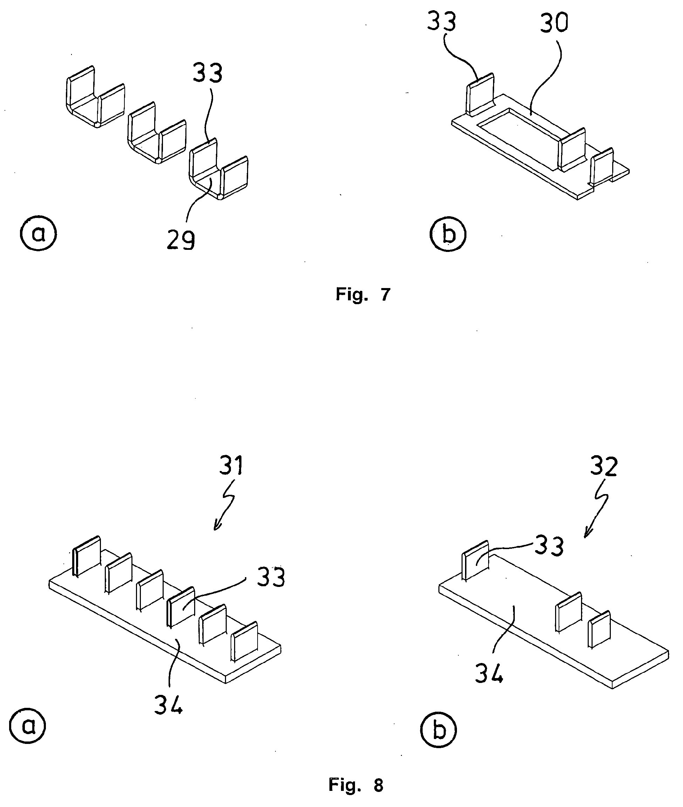

Die Figuren 4, 5 zeigen den Isolierkörper 11, dar aus einem oberen Isolierkörperteil 22 und einem unteren Isolierkörperteil 23 zusammengesetzt ist, ohne das Steckkupplungsgehäuse 8. Der Isolierkörper 11 weist innenliegende Kammern 24, 24' auf, in denen die Durchgangselemente 10, 12 entsprechend der Figur 6 aufgenommen sind. Die Brückenkonfiguration der in den Kammern 24 angeordneten Durchgangselemente 10 erfolgt in einem Codierraum 18, der unterhalb einer Codierraumabdeckung 19 des Isolierkörpers 11 vorgesehen ist. In der Figur 4 ist der Isolierkörper 11 mit auf dem oberen Isolierkörperteil 23 aufgesetzter Codierraumabdeckung 19 und in der Figur 5 mit vom Isolierkörper abgenommener Codierraumabdeckung 19 abgebildet. Die Figur 5 zeigt den geöffneten Codierraum 18 mit daneben liegender Abdeckung 19, die zur Durchführung der Brückenkonfiguration einfach abnehmbar und aufsetzbar ausgebildet ist. An einem Boden 20 des Codierraums 18 sind für sechs der sieben in der Figur 6 sichtbaren Durchgangselemente 10 Einführungsöffnungen 21 für in dieser Figur nicht dargestellte Brückungselemente vorgesehen, die in der Figur 7 als Brückungselemente 29, 30 enthalten sind.

Figur 6 zeigt den Isolierkörper 11 mit vom unteren Isolierkörperteil 23 entfernten oberen Isolierkörperteil 22. In den nebeneinander liegenden Kammern 24, 24' des unteren Isolierkörperteils 23 liegen die Durchgangselemente 10, 12 ein, die als Stanzbiegeteile aus einem flachen leitfähigen Material hergestellt sind. Die Durchgangselemente 10 zur Spannungsversorgung des Motors 1 weisen erste Kontaktbuchsen 25 für die Steckkontakte des in der Figur 1 abgebildeten Motoranschlusssteckers 3 sowie zweite Kontaktbuchsen 26 für die in den Figuren 7, 8 dargestellten Brückungselemente 29, 30 auf. Für den Anschluss der elektrischen Anschlussleitungen, der bei entsprechend der Figur 3 geöffnetem Steckkupplungsgehäuse 8 und darin befindlichen Isolierkörper 11 vorgenommen wird, sind an einigen bestimmten Durchgangselementen 10 Federschenkelklemmen 27 vorgesehen, die mit Klemmstößeln 28 betätigbar sind. Die restlichen Durchgangselemente 10 ohne Federschenkelklemmen werden, abhängig von der Betriebsart, über die Brückungselemente 29, 30 im Codierraum 18 mit einem oder mehreren der anderen Durchgangselemente 10 leitend verbunden, die eine Federschenkelklemme 27 aufweisen.

Für die Dreiecks- und die Sternschaltung sind naturgemäß unterschiedliche Brückungselemente 29, 30 erforderlich, die in der Figur 7 dargestellt sind. Für die Dreiecksschaltung werden, wie die Figur 7a zeigt, drei identisch ausgebildete U-förmige Brückungselemente 29 benötigt, mit der jeweils zwei benachbarte Durchgangselemente 10 miteinander verbindbar sind. Für die Sternschaltung wird ein einziges Brückungselement 30 benötigt, wie es in der Figur 7b abgebildet ist, das drei Durchgangselemente 10 miteinander verbindet. Die Brückungselemente 29, 30 sind als Stanzbiegeteil hergestellt und weisen Steckzungen 33 zum Eingriff in die in der Figur 6 sichtbaren Kontaktbuchsen 26 auf.

Zur einfacheren Handhabbarkeit sind die Brückungselemente 29 bzw. 30, wie aus der Figur 8 ersichtlich, in einem Codierstecker 31 für die Dreiecksschaltung und einem Codierstecker 32 für die Sternschaltung integriert. Dazu sind sie, wie in den Figuren 8a, b dargestellt, bis auf die Steckzungen 33 in einen Kunststoffträger 34 eingebettet.

## Patentansprüche

1. Anschlusssteckkupplung (4) zur Spannungsversorgung eines Mehrphasenmotors (1), mit einem Steckkupplungsgehäuse (8), das eine Anzahl von elektrisch leitfähigen Durchgangselementen (10, 12) für anzuschließende elektrische Anschlussleitungen aufweist, wobei mittels jedem der Durchgangselemente (10, 12) eine elektrische Verbindung der Anschlussleitungen zu einem zugeordneten Steckkontakt eines außen an einem Motorgehäuse (2) des Mehrphasenmotors (1) angebrachten Anschlusssteckers (3) herstellbar ist, der mit einem der Wicklungsleiter des Motors (1) verbunden ist, wobei das Steckkupplungsgehäuse (8) einen von einem Anschlussbereich (17) getrennten Codierraum (18) aufweist, in dem die
Betriebsart des Motors (1) in Dreiecks- oder Sternschaltung durch interne als Steckverbindung ausgebildete Brückenkonfiguration der Durchgangselemente (10) festlegbar ist, und wobei der Codierraum (18) als abgeschlossener Codierraum (18) und der Anschlussbereich (17) als ein von dem Codierraum (18) abgetrennter Anschlussraum (17) ausgebildet ist, **dadurch gekennzeichnet, dass**
• die Durchgangselemente (10, 12) in Richtung der Steckkontakte des Anschlusssteckers (3) weisende Kontaktbuchsen (25) für die Steckkontakte und in Richtung des Codierraums weisende Kontaktbuchsen (26) für zur Brückenkonfiguration vorgesehene Brückungselemente (29, 30) aufweist,
• die Durchgangselemente (10, 12) in einem in dem Steckkupplungsgehäuse (8) eingesetzten Isolierkörper (11) angeordnet sind,
• das Steckkupplungsgehäuse (8) zweiteilig ausgebildet ist und aus einem vorderen Steckkupplungsgehäusekörper (13) und einem gelenkig mit diesem verbundenen hinteren Steckkupplungsgehäusedeckel (14) besteht, wobei der schwenkbare Steckkupplungsgehäusedeckel (14) den Anschlussraum (17) des Steckkupplungsgehäuses (8) verschließt,
• der Codierraum (18) in dem Isolierkörper (11) angeordnet ist, und
• der Isolierkörper (11) in dem Steckkupplungsgehäusekörper (13) lösbar fixiert ist.

2. Anschlusssteckkupplung nach Anspruch 1, **dadurch gekennzeichnet, dass** die interne Steckverbindung einen Codierstecker (31, 32) aufweist.

3. Anschlusssteckkupplung nach Anspruch 1 oder 2, **dadurch gekennzeichnet, dass** die Durchgangselemente (10) als Stanzbiegeteile hergestellt sind.

4. Anschlusssteckkupplung nach einem der vorangegangenen Ansprüche, **dadurch gekennzeichnet, dass** die Durchgangselemente (10) eine Federschenkelklemme (27) für die elektrischen Anschlussleitungen aufweisen.

5. Anschlusssteckkupplung nach einem der vorangegangenen Ansprüche, **dadurch gekennzeichnet, dass** der Codierraum (18) eine abnehmbare Codierraumabdeckung (19) aufweist.

6. Anschlusssteckkupplung nach Anspruch 1, **dadurch gekennzeichnet, dass** der Steckkupplungsgehäusekörper (13) und der Steckkupplungsgehäusedeckel (14) mit einem quer zur Steckrichtung der Anschlusssteckkupplung (4) verlaufendem Schwenkgelenk (16) derart miteinander verbunden sind, dass der Steckkupplungsgehäusedeckel (14) gegenüber dem Steckkupplungsgehäusekörper (13) um etwa 90 Grad oder mehr schwenkbar ist.

## Claims

1. A motor connector (4) for supplying of voltage to a polyphase motor (1), with a connector housing (8) that contains a number of electrically conductive pass-through elements (10, 12) for electrical supply lines to be connected, wherein by means of each of said pass-through elements (10, 12), the supply lines can be connected electrically to an associated plug contact of a connecting plug (3) mounted on the outside of a motor housing (2) of the polyphase motor (1), said contact being connected to one of the winding conductors of the motor (1), wherein the connector housing (8) has a coding chamber (18) that is separated from the connection section (17) and wherein the operating mode of the motor (1) in delta or star connection can be selected by means of internal bridge configuration of the pass-through elements (10), said internal bridge configuration being implemented as an internal plug connection, and wherein the coding chamber (18) is designed as an enclosed coding chamber (18) so that the connection section (17) forms a connection chamber (17) that is separated from the coding chamber (18), **characterized in that**
• the pass-through elements (10, 12) have contact sockets (25) for the plug contacts that are orientated towards the plug contacts of the connecting plug (3) and contact sockets (26) that are provided for internal bridge configuration by means of bridging elements (29, 30) being orientated towards the coding chamber (18),
• the pass-through elements (10, 12) are arranged in an insulating body (11), said insulating body (11) being inserted in the connector housing body (13),
• the connector housing (8) consists of two parts and comprises a front connector housing body (13) and a rear connector housing cover (14) that are connected to each other by means of a swivel joint, wherein the swivel-mounted connector housing cover (14) shuts the connection chamber (17) of the connector housing (8),
• the coding chamber (18) is arranged in the insulating body (11), and
• the insulating body (11) is held non-permanently in the connector housing body (13).

2. The plug connector as claimed in claim 1, **characterized in that** the internal plug connection has a coding plug (31, 32).

3. The plug connector as claimed in claim 1 or 2, **characterized in that** the pass-through elements (10) are manufactured as stamped and bent parts.

4. The plug connector as claimed in one of the above claims, **characterized in that** the pass-through elements (10) have a spring terminal (27) for the electrical supply lines.

5. The plug connector as claimed in one of the above claims, **characterized in that** the coding chamber (18) has a removable coding chamber cover (19).

6. The plug connector as claimed in claim 1, **characterized in that** connector the housing body (13) and the connector housing cover (14) are connected to each other by means of a swivel joint (16) that is oriented transversely to the plug direction of the plug connector in such a manner that the connector housing cover (14) can be swiveled by approximately 90 degrees or more related to the connector housing body (13).

## Revendications

1. Connecteur (4) pour l'alimentation électrique d'un moteur polyphasé (1), avec un boîtier de connecteur (8), qui présente un nombre d'éléments de passage électriquement conducteurs (10, 12) pour des lignes de raccordement électriques à raccorder, dans lequel une liaison électrique des lignes de raccordement à un contact à fiche associé d'un connecteur (3) placé extérieurement sur un boîtier de moteur (2) du moteur polyphasé (1) et qui est relié à un des conducteurs d'enroulement du moteur (1) peut être établie au moyen de chacun des éléments de passage (10, 12), dans lequel le boîtier de connecteur (8) présente un espace de codage (18) séparé d'une région de raccordement (17), dans lequel le mode de fonctionnement du moteur (1) en montage triangle ou étoile peut être fixé par une configuration en pont interne des éléments de passage (10) réalisée sous forme de connexion à fiche, et dans lequel l'espace de codage (18) est réalisé en forme d'espace de codage fermé (18) et la région de raccordement (17) est réalisée en forme d'espace de raccordement (17) séparé de l'espace de codage (18), **caractérisé en ce que**
• les éléments de passage (10, 12) présentent des douilles de contact (25) pour les contacts à fiche orientées en direction des contacts à fiche du connecteur (3) et des douilles de contact (26) pour des éléments de pontage (29, 30) prévus pour la configuration en pont orientées en direction de l'espace de codage,
• les éléments de passage (10, 12) sont disposés dans un corps isolant (11) introduit dans le boîtier de connecteur (8),
• le boîtier de connecteur (8) est réalisé en deux parties et se compose d'un corps avant de boîtier de connecteur (13) et d'un corps arrière de boîtier de connecteur (14) relié à celui-ci de façon articulée, dans lequel le couvercle pivotant de boîtier de connecteur (14) ferme l'espace de raccordement (17) du boîtier de connecteur (8),
• l'espace de codage (18) est disposé dans le corps isolant (11), et
• le corps isolant (11) est fixé de façon séparable dans le corps de boîtier de connecteur (13).

2. Connecteur selon la revendication 1, **caractérisé en ce que** la connexion à fiche interne présente un connecteur de codage (31, 32).

3. Connecteur selon la revendication 1 ou 2, **caractérisé en ce que** les éléments de passage (10) sont fabriqués sous forme de pièces pliées à la presse.

4. Connecteur selon l'une quelconque des revendications précédentes, **caractérisé en ce que** les éléments de passage (10) présentent une borne à ressort à branche (27) pour les lignes de raccordement électriques.

5. Connecteur selon l'une quelconque des revendications précédentes, **caractérisé en ce que** l'espace de codage (18) présente un couvercle d'espace de codage amovible (19).

6. Connecteur selon la revendication 1, **caractérisé en ce que** le corps de boîtier de connecteur (13) et le couvercle de boîtier de connecteur (14) sont reliés l'un à l'autre avec une articulation pivotante (16) s'étendant transversalement à la direction d'enfichage du connecteur (4), de telle manière que le couvercle de boîtier de connecteur (14) puisse pivoter d'environ 90° ou plus par rapport au corps de boîtier de connecteur (13) .
